# EUROPÄISCHE PATENTSCHRIFT

(11) **EP 1 222 116 B1**
(45) Veröffentlichungstag und Bekanntmachung des Hinweises auf die Patenterteilung: **24.03.2004**
(21) Anmeldenummer: 00982956.5
(22) Anmeldetag: 06.10.2000
(51) Int. Cl.: B65D 1/00

(54) **SCHRAUBKAPPE FÜR EINEN BEHÄLTER**
SCREW CAP FOR A CONTAINER
BOUCHON A VIS DESTINE A UN CONTENANT

(30) Priorität: 15.10.1999 DE 19949688
(43) Veröffentlichungstag der Anmeldung: 17.07.2002
(73) Patentinhaber: GAPLAST GmbH, D-82442 Altenau (DE)
(72) Erfinder: KNEER, Roland, 82490 Farchant (DE)
(74) Vertreter: Flosdorff, Jürgen, Dr.
(86) Internationale Anmeldenummer: PCT/DE2000/003512
(87) Internationale Veröffentlichungsnummer: WO 2001/026973

(56) Entgegenhaltungen:
- EP-A- 0 631 943
- DE-A- 4 202 044
- FR-A- 2 523 082
- GB-A- 731 417
- US-A- 4 210 251

## Beschreibung

Die Erfindung betrifft eine Schraubkappe für einen Behälter, der beispielsweise die Form eines Fläschchens haben und Tabletten enthalten kann, ohne daß die Erfindung auf die vorgenannte Form und den Verwendungszweck beschränkt ist. Die Schraubkappe kann mit einer Außenkappe versehen sein, die einen kindersicheren Behälterverschluß bildet und zum Losschrauben der Schraubkappe niedergedrückt werden muß, so daß eine Riffelung an der Unterseite der Außenkappe in eine Riffelung an der Oberseite des Deckelabschnitts der Schraubkappe eingreift. Auch hierauf ist die Erfindung aber nicht beschränkt, sondern die Schraubkappe ist auch ohne kindersichere Außenkappe verwendbar.

Wenn der Behälterinhalt gegen eindringende Luftfeuchtigkeit geschützt werden muß, was beispielsweise bei pharmazeutischen Produkten meist der Fall ist, wird in dem Behälter ein Feuchtigkeit absorbierendes Trockenmittel untergebracht. Dies geschieht bei mit Schraubkappen versehenen Behältern bisher in der Weise, daß ein Trockenmittelkissen auf den Behälterinhalt aufgelegt wird, bevor der Behälter mit der Schraubkappe verschlossen wird.

Diese Ausbildung hat den Nachteil, daß der Befüllvorgang des Behälters einen zusätzlichen Arbeitsschritt erfordert, nämlich das Einlegen des Trockenmittelkissens in den Behälter, und daß die in unmittelbarer Nähe des Trockenmittelkissens befindlichen Füllkörper übermäßig austrocknen können, so daß sie sehr zerbrechlich werden, was beispielsweise bei Gelatinekapseln der Fall ist.

Der vorliegenden Erfindung liegt die Aufgabe zugrunde, eine Schraubkappe der betrachteten Art so weiter zu entwickeln, daß die oben genannten Nachteile vermieden sind. Außerdem soll ein Verfahren zur Herstellung einer solchen Schraubkappe angegeben werden.

Diese Aufgaben werden erfindungsgemäß durch die Merkmale der Patentansprüche 1 und 7 gelöst.

Eine Schraubkappe gemäß dem Oberbegriff des Anspruchs 1 wird durch DE 4 202 044 offenbart.

Vorteilhafte Ausgestaltungen der Erfindung sind in den abhängigen Ansprüchen gekennzeichnet.

Bei der erfindungsgemäßen Schraubkappe ist an dem Deckelabschnitt eine Trockenmittelkammer angeformt. Damit ist die Trockenmittelkammer einstückig mit der Schraubkappe ausgebildet, so daß das bisherige Erfordernis entfällt, einen von der Schraubkappe getrennt ausgebildeten, mit Trockenmittel gefüllten Körper in den Behälter einzubringen.

Außerdem ermöglicht es die an dem Deckelabschnitt angebrachte Trockenmittelkammer, mit einfachen Mitteln sicherzustellen, daß der Behälterinhalt nicht stellenweise - d.h. in der Nähe des Trockenmittels- zu stark ausgetrocknet wird.

Das erfindungsgemäße Verfahren sieht vor, daß der Bereich des Gewindes an der Innenseite der im wesentlichen zylindrischen Außenwand der Schraubkappe dadurch entformt wird, daß ein zugehöriges Formkernteil gedreht wird, bis die Schraubkappe außer Eingriff mit diesem Formkernteil gelangt, nachdem der innen anschließenden Formkernteile zum Entformen der Schraubkappe relativ zu dieser in axialer Richtung zurückgezogen wurde. Dies bedeutet, daß zur Ausbildung der Außenwand der Trockenmittelkammer und des Gewindes an der Innenseite der zylindrischen Außenwand der Schraubkappe ein aus zwei (oder mehr) Teilen bestehenden Formkern vorgesehen ist, wodurch das Problem der Entformung der mit angeformter Trockenmittelkammer versehenen Schraubkappe erfindungsgemäß gelöst ist.

Weiter wird mit besonderem Vorteil vorgeschlagen, daß am unteren Ende der Trockenmittelkammer eine Abdeckkappe mit einer mit Löchern versehenen Bodenwand befestigt ist und daß im Abstand über dieser Bodenwand eine Trennwand angeordnet ist, die den Aufnahmeraum für das Trockenmittel begrenzt. Damit wirkt die Bodenwand der Abdeckkappe als Abstandhalter für das Füllgut von dem Trockenmittel, so daß es nicht zu einer übermäßigen Austrocknung der oberen Bestandteile des Behälterinhalts kommen kann. Die Trennwand, die den Aufnahmeraum für das Trockenmittel begrenzt, besteht zweckmäßigerweise aus Pappe.

In weiteren Einzelheiten wird vorgeschlagen, daß an der Innenwand der Trockenmittelkammer in axialer Richtung verlaufende Rippen über den Umfang verteilt angeordnet sind, die im Abstand von einigen Millimetern oberhalb des unteren Randes der Trockenmittelkammer enden. Auf den freien unteren Stirnflächen dieser Längsrippen liegt die Pappscheibe auf, die in dieser Position von der Abdeckkappe fixiert ist, die in den unteren Endabschnitt der Trockenmittelkammer eingesteckt ist. Diese vorteilhafte Ausbildung ist einfach herstellbar und mit geringem Aufwand montierbar.

Außerdem wird erfindungsgemäß vorgeschlagen, daß an dem Deckelabschnitt der Schraubkappe radial außerhalb der Trockenmittelkammer ein ringförmiger Ansatz mit einer querschnittlich konvexen Außenkontur angeformt ist, der üblicherweise als Olivring bezeichnet wird und bei aufgeschraubter Schraubkappe dicht an der Innenwand des Behälterhalses anliegt.

Außerdem kann vorgesehen sein, daß auf die erfindungsgemäß Schraubkappe eine kindersichere Außenkappe aufschnappbar ist, mit der die Schraubkappe in Öffnungsrichtung gedreht werden kann, wenn die Außenkappe, deren Deckelabschnitt eine bezüglich der Schraubkappe konvexe Form hat, derart niedergedrückt wird, daß eine Riffelung an ihrer Unterseite in Eingriff mit einer Riffelung an der Oberseite des Deckelabschnitts der Schraubkappe in Eingriff gerät.

Weitere Einzelheiten der Erfindung ergeben sich aus der nachfolgenden Beschreibung einer bevorzugten Ausführungsform der erfindungsgemäßen Schraubkappe und eines Werkzeugs zur Herstellung dieser Schraubkappe mit Bezug auf die Zeichnung. Dabei zeigen:
- Fig. 1: einen Vertikalschnitt durch die Schraubkappe;
- Fig. 2: eine Aufsicht auf die Schraubkappe gemäß Fig. 1;
- Fig. 3: einen Vertikalschnitt durch einen Behälter mit aufgeschraubter Schraubkappe, auf die eine kindersichere Außenkappe aufgeschnappt ist;
- Fig. 4: eine Seitenansicht der Anordnung gemäß Fig. 3 und
- Fig. 5: wesentliche Teile eines Werkzeugs zur Herstellung der Schraubkappe.

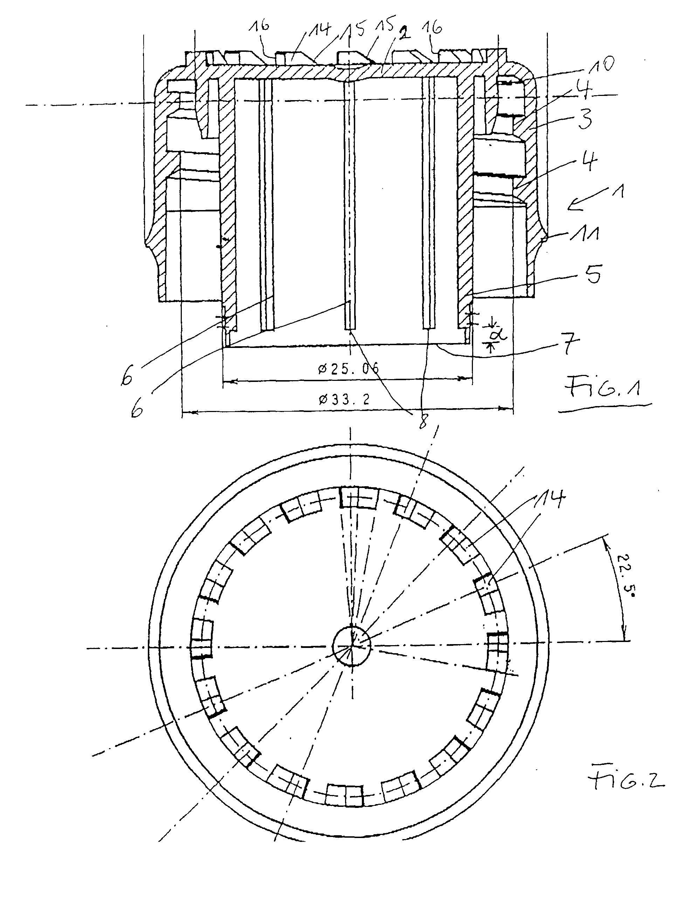

Es wird zunächst auf die Figuren 1 und 2 Bezug genommen, die eine Schraubkappe 1 im vergrößerten Zustand zeigen. Die Schraubkappe enthält einen Deckelabschnitt 2, der im Randbereich in eine im wesentlichen zylindrische Außenwand 3 übergeht. An dieser Außenwand 3 ist innen ein Gewinde 4 ausgebildet.

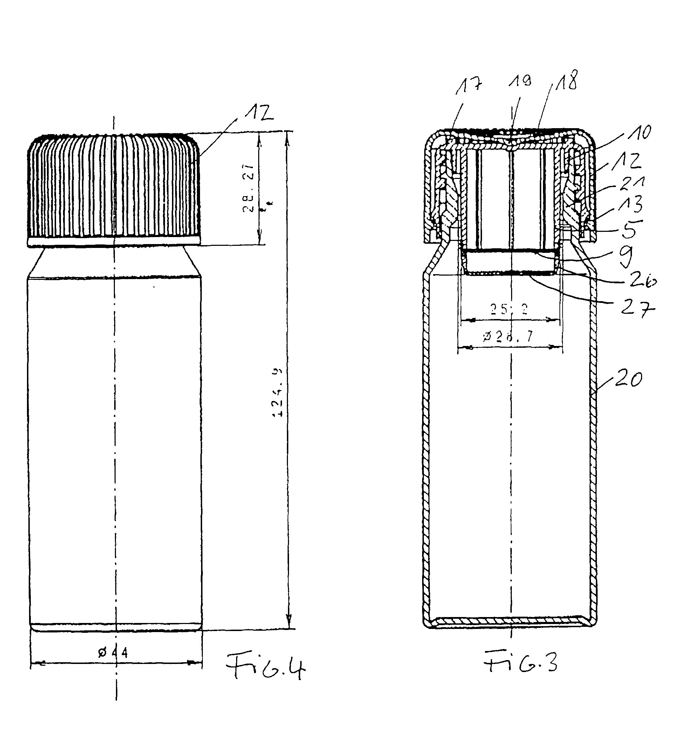

An der Unterseite des Deckelabschnitts 2 ist eine Trockenmittelkammer 5 angeformt, von deren Innenwand in axialer Richtung verlaufende Stege 6 vorstehen, die im Abstand d von wenigen Millimetern oberhalb des unteren Randes 7 der Trockenmittelkammer 5 enden. Die unteren Stirnflächen 8 der Stege 6 bilden Auflager für eine Pappscheibe 9 (Fig. 3), was weiter unten noch näher erläutert wird.

Radial außerhalb der Trockenmittelkammer 5 ist an der Unterseite des Trockenmittelabschnitts 2 außerdem ein Olivring 10 angeformt.

Im unteren Bereich der Außenwand 3 verbreitert sich diese zu einer ringförmig vorstehende Rastnase 11, auf die eine Außenkappe 12 (Fig. 3 und 4) mit einem inneren ringförmigen Vorsprung 13 aufschnappt.

An der Oberseite des Deckelabschnitts 2 ist ein ringförmiger Zahnkranz angeformt, dessen Zähne 14 jeweils eine schräge Flanke 15 und -dieser gegenüberliegend- eine vertikale Stirnfläche 16 haben. In diese Zähne 14 kann eine entsprechend geformte Verzahnung 17 an der Unterseite des Deckelabschnitts 18 der Außenkappe 12 eingreifen, wenn diese in einen im wesentlichen ebenen Zustand niedergedrückt wird, was nachfolgend mit Bezug auf Fig. 3 beschrieben wird.

Der Deckelabschnitt 18 der Außenkappe 12 hat bezüglich der innenliegenden Schraubkappe 1 eine konvexe Form, wobei der Deckelabschnitt 18 mit dem gewölbt vorstehenden Zentrum 19 auf der Schraubkappe 1 aufliegt, während die Verzahnung mit den Zähnen 14 der Schraubkappe 1 in Eingriff steht.

Wie weiter oben bereits erwähnt ist, wird eine Pappscheibe 9 nach Befüllen der Trockenmittelkammer 5 so in deren unteren Endabschnitt eingelegt, daß die Pappscheibe 9 auf den Stirnflächen 8 der Stege 6 aufliegt. Dann wird eine Abdeckkappe 26 in einem Klemmsitz in den unteren Endabschnitt der Trockenmittelkammer 5 eingesteckt, die die Pappscheibe 9 in Position hält. Die aus Kunststoff befindliche Abdeckkappe 26 hat eine gelochte Bodenwand 27 und dient als Abstandhalter des Behälterinhalts zu dem Trockenmittel.

Der Behälter 20 ist im Spritzgußblas- oder Extrusionsblasverfahren aus Kunststoff hergestellt und enthält im Halsbereich eine nach innen weisende Verdickung 21, die nur geringfügig von der Trockenmittelkammer 5 beabstandet ist. Dabei erweitert sich der Halsbereich, wobei der Olivring 10 am oberen Randbereich des Behälterhalses anliegt. Der Zahnkranz 14 liegt dem oberen Rand des Behälterhalses gegenüber.

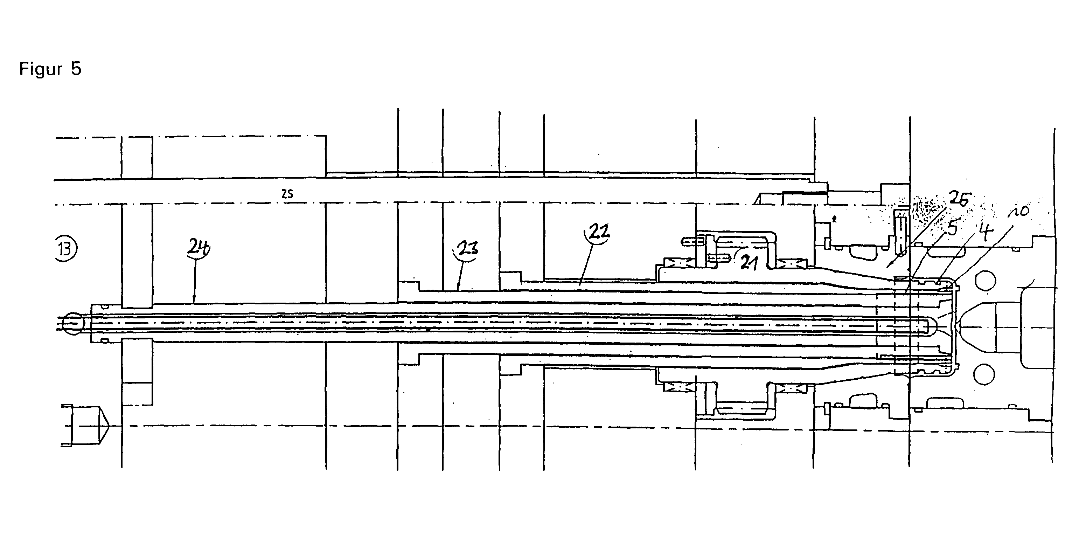

Fig. 5 zeigt einen wesentlichen Teil eines Spritzguß-Werkzeugs zur Herstellung der erfindungsgemäßen Schraubkappe 1. Der Bereich zwischen dem Gewinde 4 und der Trockenmittelkammer 5 wird von einem zweigeteilten Formkern ausgebildet, und zwar einem äußeren Formkernteil 21 und einem radial innenliegenden Formkernteil 22, die außerdem das Formnest für den Olivring 10 begrenzen. Radial innen schließt sich eine Hülse 23 an, die fest in dem Werkzeug sitzt, an deren Innenseite ein weiteres Formkernteil 24 anliegt, das ebenso wie die Formkernteile 22, 21 und ein daran außen anliegendes Werkzeugteil 25 in axialer Richtung verschiebbar ist.

Zum Entformen der Schraubkappe 1 fahren zunächst die Werkzeugteile 24, 22, 21 und 25 in der Darstellung der Fig. 5 nach rechts, während die Hülse 23 (die fest in dem Werkzeug sitzt) stehenbleibt, wodurch die Trockenmittelkammer 5 an der Innenseite freigestellt ist.

Es folgt ein zweiter Hub der Bauteile 25, 21 und 24 nach rechts, wobei das Formkernteil 22 stehenbleibt, so daß der Olivring 10 innen freigestellt wird.

In einem dritten Schritt wird das Formkernteil bzw. der Einsatz 21 um seine Längsachse gedreht, wobei sich die Schraubkappe 1 aus dem Eingriff mit dem Formkernteil 21 herausschraubt, wobei die Werkzeugteile 25 und 24 dieser Bewegung nach rechts folgen. Damit ist der Gewindeabschnitt der Schraubkappe freigestellt.

Es folgt ein abschließender Hub der Bauteile 25 und 24 nach rechts, bis die Schraubkappe 1 aus dem Werkzeug herausgestoßen ist.

## Patentansprüche

1. Schraubkappe, die im Spritzgußverfahren aus Kunststoff hergestellt ist, mit einem Deckelabschnitt und einer im wesentlichen zylindrischen wobei Außenwand, an deren Innenseite ein Gewinde ausgebildet ist, wobei
an dem Deckelabschnitt (2) eine Trockenmittelkammer angeformt ist (5)
**dadurch gekennzeichnet, daß** radial außerhalb der Trockenmittelkammer (5) ein Olivring (10) angeformt ist.

2. Schraubkappe nach Anspruch 1,
**dadurch gekennzeichnet,**
**daß** am unteren Ende der Trockenmittelkammer (5) eine Abdeckkappe (26) mit einer mit Öffnungen versehenen Bodenwand (27) befestigt ist und daß im Abstand über der Bodenwand eine Trennwand (9) angeordnet ist, die den Aufnahmeraum für das Trockenmittel begrenzt.

3. Schraubkappe nach Anspruch 2,
**dadurch gekennzeichnet,**
**daß** die Trennwand (9) eine aus Pappe bestehende Scheibe ist.

4. Schraubkappe nach einem der Ansprüche 1 bis 3,
**dadurch gekennzeichnet,**
**daß** an der Innenwand der Trockenmittelkammer (5) Längsrippen (6) über den Umfang der Trockenmittelkammer (5) verteilt angeformt sind, die in einem kleinen Abstand (d) oberhalb des Randes (7) der Trockenmittelkammer (5) enden.

5. Schraubkappe nach einem der Ansprüche 1 bis 4,
**dadurch gekennzeichnet,**
**daß** die Abdeckkappe (26) in das untere Ende der Trockenmittelkammer (5) eingesteckt ist, wobei die Pappscheibe (9) auf den freien Stirnflächen (8) der Längsrippen (6) aufliegt.

6. Schraubkappe nach einem der Ansprüche 1 bis 5,
**dadurch gekennzeichnet,**
**daß** auf die Schraubkappe (1) eine kindersichere Außenkappe (12) aufgeschnappt ist.

7. Verfahren zur Herstellung einer Schraubkappe nach einem der Ansprüche 1 bis 6,
**dadurch gekennzeichnet,**
**daß** der Bereich zwischen dem Gewinde und der Trockenmittelkammer der Schraubkappe durch einen zweigeteilten Formkern ausgebildet wird und daß der Bereich des Gewindes der Schraubkappe dadurch entformt wird, daß das äußere Formkernteil (21) um seine Längsachse gedreht wird, nachdem das radial innen anliegende Formkernteil (22) in axialer Richtung zurückgezogen ist.

## Claims

1. A screw cap, which is made of plastic by injection moulding, including a lid section and a substantially cylindrical external wall, formed on whose inner surface there is a screwthread, whereby formed on the lid section (2) there is a desiccant chamber (5), **characterised in that** formed radially outside the desiccant chamber (5) there is an olive ring (10).

2. A screw cap as claimed in Claim 1, **characterised in that** secured to the lower end of the desiccant chamber (5) there is a cover cap (26) with a bottom wall (27) provided with openings and that arranged at a spacing above the bottom wall there is a partition wall (9), which borders the receiving space for the desiccant.

3. A screw cap as claimed in Claim 2, **characterised in that** the partition wall (9) is a disc comprising cardboard.

4. A screw cap as claimed in one of Claims 1 to 3, **characterised in that** longitudinal ribs (6) are formed on the internal wall of the desiccant chamber (5) distributed over the periphery of the desiccant chamber (5) and terminating at a small distance (d) above the edge (7) of the desiccant chamber (5).

5. A screw cap as claimed in one of Claims 1 to 4, **characterised in that** the cover cap (26) is inserted into the lower end of the desiccant chamber (5), the cardboard disc (9) engaging the free end surfaces (8) of the longitudinal ribs (6).

6. A screw cap as claimed in one of Claims 1 to 5, **characterised in that** a childproof external cap (12) is snap-fitted onto the screw cap (1).

7. A method of manufacturing a screw cap as claimed in one of Claims 1 to 6, **characterised in that** the region between the screw thread and the desiccant chamber of the screw cap is formed by a two-part mould core and that the region of the screw thread of the screw cap is demoulded by rotating the outer mould core portion (21) about its longitudinal axis after the radially inwardly engaging mould core portion (22) has been retracted in the axial direction.

## Revendications

1. Bouchon fileté, qui est fabriqué en matière plastique par un procédé de moulage par injection, et qui consiste en une partie formant couvercle et en une paroi extérieure sensiblement cylindrique, sur la surface intérieure de laquelle est formé un filetage, et un logement de dessiccateur (5) étant formé sur la partie (2) formant couvercle,
**caractérisé en ce qu'**un anneau de prise (10) est formé radialement à l'extérieur du logement de dessiccateur (5).

2. Bouchon fileté selon la revendication 1,
**caractérisé en ce qu'**un bouchon de protection (26) est fixé au niveau de l'extrémité inférieure du logement de dessiccateur (5) et **en ce qu'**il comporte une paroi formant fond (27) pourvue d'ouvertures, et **en ce qu'**une paroi de séparation (9) est disposée à une certaine distance au-dessus de la paroi formant fond et délimite l'espace de réception pour le dessiccateur.

3. Bouchon fileté selon la revendication 2,
**caractérisé en ce que** la paroi de séparation (9) est un disque fait en carton.

4. Bouchon fileté selon l'une des revendications 1 à 3,
**caractérisé en ce que** des nervures longitudinales (6) sont formées sur la paroi intérieure du logement de dessiccateur (5), de manière répartie sur toute la circonférence du logement de dessiccateur (5), et **en ce qu'**elles se terminent à une petite distance (d) au-dessus du bord (7) du logement de dessiccateur (5).

5. Bouchon fileté selon l'une des revendications 1 à 4,
**caractérisé en ce que** le bouchon de protection (26) est enfoncé dans l'extrémité inférieure du logement de dessiccateur (5), le disque en carton (9) venant alors s'appliquer sur les faces libres (8) des nervures longitudinales (6).

6. Bouchon fileté selon l'une des revendications 1 à 5,
**caractérisé en ce qu'**un bouchon extérieur (12) de sécurité enfants est encliqueté sur le bouchon fileté (1).

7. Procédé de fabrication d'un bouchon fileté selon l'une des revendications 1 à 6,
**caractérisé en ce que** la zone, située entre le filetage et le logement de dessiccateur du bouchon fileté, est formée au moyen d'un noyau de moule en deux parties, et **en ce que** la zone du filetage du bouchon fileté est démoulée en tournant la partie extérieure de noyau de moule (21) autour de son axe longitudinal, après que la partie de noyau de moule (22), placée radialement à l'intérieur, a été retirée en direction axiale.
